Europäisches Patentamt

European Patent Office

Office européen des brevets

(11) Publication number:
# 0 325 664
## A1

## (12) EUROPEAN PATENT APPLICATION

(21) Application number: 88101063.1

(51) Int. Cl.⁴: **G11B 23/087**

(22) Date of filing: 26.01.88

(43) Date of publication of application:
**02.08.89 Bulletin 89/31**

(84) Designated Contracting States:
**CH DE ES GB IT LI**

(71) Applicant: **SHAPE INC.**
**P.O. Box 366**
**Biddeford Maine 04005(US)**

(72) Inventor: **Landry, Vince**
**P.O. Box 643**
**Saco Maine 04072(US)**
Inventor: **Gelardi, John**
**P.O. Box 213**
**Cape Porpoise Maine 04014(US)**

(74) Representative: **von Raffay, Vincenz, Dipl.-Ing.**
**et al**
**Patentanwälte Raffay & Fleck Postfach 32 32**
**17**
**D-2000 Hamburg 13(DE)**

(54) Self-locking hub assembly for a compact audio tape cassette and method for assembly.

(57) An internal, self-locking hub assembly (69,71) for a compact, audio, tape cassette (62) is described including a locking member (80) with two movable portions (92,94) and a spring (82,84). The tape cassette includes receptacles (122) formed in a raised annular ring (118) thereof. The spring normally forces the two movable portions radially inward in a direction parallel to the plane of the hub, wherein the two movable portions engage the receptacles in the raised annular ring, and lock the hub against rotation. On the other hand, when the tape cassette is placed into a tape player/recorder, the spindle thereof enters the center of the hub, abuts and moves the two movable portions radially outward against the force of the spring thereby unlocking the two movable portions from the receptacles and permitting normal rotation of the hub. A related method includes the steps of: forming the locking member to include two movable portions, a spring and a locating member; picking up the locking member; forming a hub to include a mounting member corresponding to the locating member; advancing the locking member to the hub; inserting the locking member into the hub such that the locating member is fixedly received by the mounting member; mounting the hub into a cassette base; forming a cassette cover to include the receptacles; positioning the cassette cover on the base, such that the receptables receive the two movable portions.

*FIG. 4.*

# SELF-LOCKING HUB ASSEMBLY FOR A COMPACT AUDIO TAPE CASSETTE AND METHOD FOR ASSEMBLY

## BACKGROUND OF THE INVENTION

This invention relates to a compact, audio, tape cassette and, more particularly, to a self-locking hub assembly for such a tape cassette which prevents despooling of the recording tape when the tape cassette is not engaged with a tape player/recorder.

A conventional, compact, audio, tape cassette contains two hubs onto which the tape is wound for supply and take-up during operation. These hubs are located between the tape cassette cover and base and are contained radially by pairs of raised annular rings formed on the inside surfaces of the cover and base which engage recessed rings on the top and bottom surfaces of each hub. When engaged with a tape player/recorder, a finned spindle thereof enters the center of the hub and cooperates with spokes formed on the center of the hub to permit a driven clockwise or counterclockwise motion of the hubs.

Because of industry tolerances, the spindles of one manufacturer's tape player/recorder can be as much as 1/32 inch different in relative location (closer or further apart) than those of another manufacturer. It is, therefore, necessary to create a clearance between the recessed rings formed on the hubs and the raised annular rings formed on the tape cassette cover and base. This clearance, however, means that, when a tape cassette is disengaged from the tape player/recorder, the hubs can turn freely and "despool," i.e., allow tape to spill throughout the inside of the tape cassette. Such despooling is not desirable because tape damage and jam conditions can result.

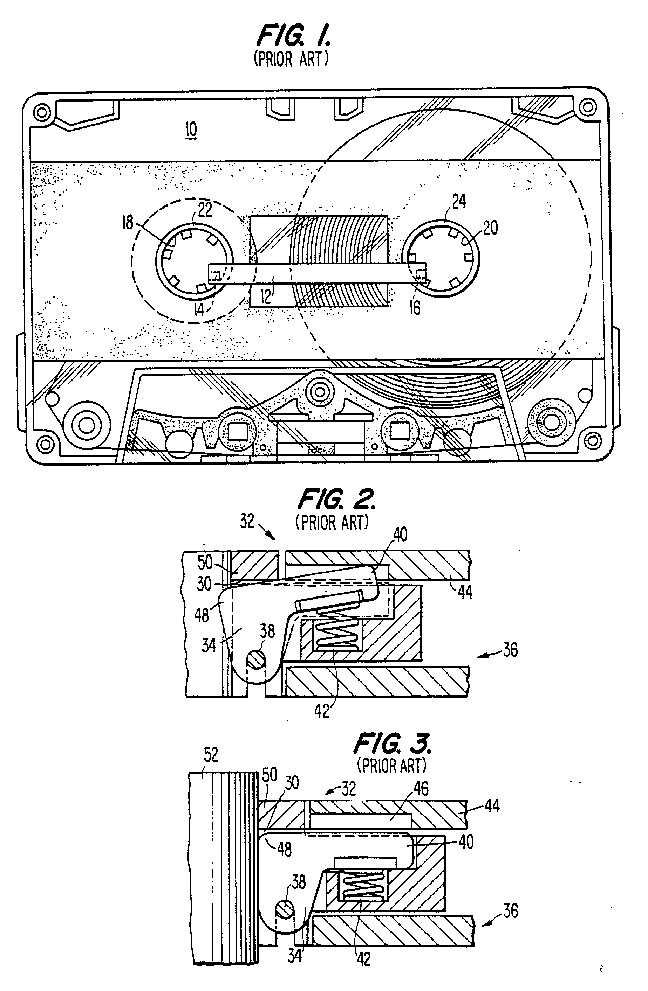

In order to prevent despooling, manufacturers of compact, audio, tape cassettes, an example of which is shown in FIG. 1 herein and referred to generally by reference numeral 10, currently use a separate, elongated clip 12 having perpendicular hooks 14 and 16 at the ends thereof which are manually inserted into the centers 18 and 20 of the tape reel hubs 22 and 24, respectively. The clip 12 is relatively simple, inexpensive and requires little work to apply after the tape cassette 10 is assembled. As a result, such clips 12 have gained widespread acceptance in the compact, audio, tape cassette industry. Unfortunately, however, the consumer ultimately removes the clip 12 to use the tape cassette 10 and usually discards the clip 12, which again results in despooling during subsequent handling.

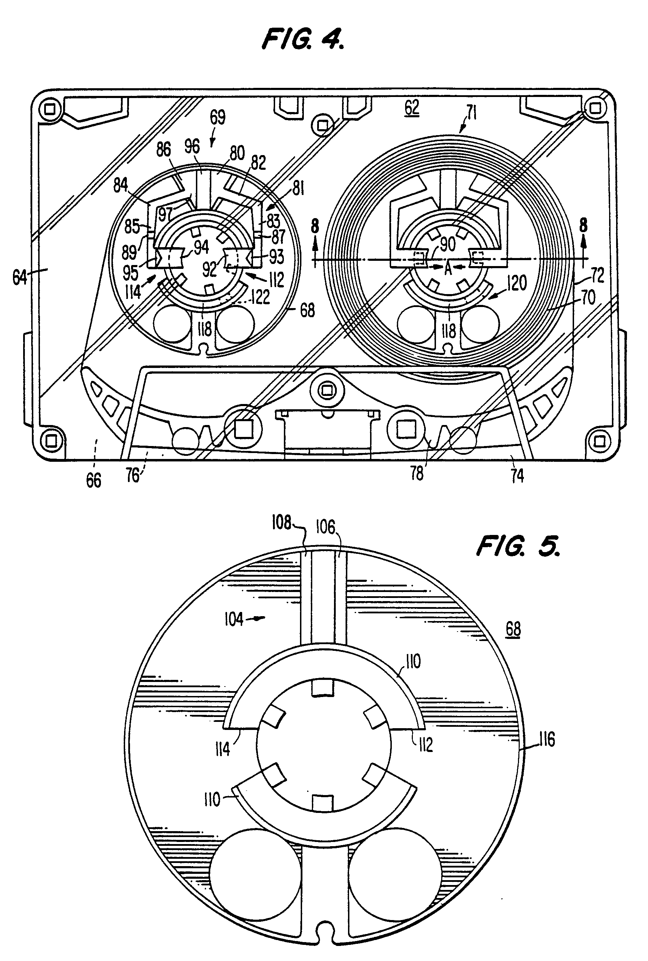

In arts other than the compact, audio, tape cassette art, efforts have been made to prevent despooling. For example, U.S. Patent No. 3,066,880, issued to BAUER, describes a self-locking hub assembly for a single reel tape cartridge which is shown in FIGS. 2 and 3 herein. More particularly, an axially and radially extending slot 30 is formed in the hub 32 to receive a movable member 34 for releasably coupling the hub 32 to the cartridge 36. The movable member 34 is pivotally mounted on a pin 38 extending across the slot 30 for angular movement relative to the plane of the hub 32. The movable member 34 includes a detente portion 40 which is normally urged by a spring 42 upwards toward the cartridge portion 44 to be received in any one of a plurality of radially extending slots 46 formed in the inside wall of the cartridge portion 44. The movable member 34 also has an actuator portion 48 which can extend inwardly from the inside wall 50 of the hub 32. Upon engaging the cartridge 36 with a tape player/recorder (not shown), the spindle 52 thereof causes the movable member 34 to rotate, which moves the actuator portion 48 outwardly and releases the hub 34 from the cartridge 36 so that the tape (not shown) can be supplied and taken up under the control of the spindle 52.

The self-locking hub assembly described in the '880 patent provides suitable self-locking for a single reel tape cartridge, but is not applicable to a double reel, compact, audio, tape cassette. As evidence, although the teaching of the '880 patent has been available for almost twenty-five years and compact, audio, tape cassettes have been available at least for twenty years (see U.S. Patent No. 3,394,899, issued to SCHOENMAKERS), no one has successfully incorporated the type of self-locking hub assembly taught by the '880 patent into a compact, audio, tape cassette--the reasons follow.

First, the pivoting nature of the self-locking hub assembly of the '880 patent works only when the single reel tape cartridge is inserted into the tape player/recorder in the one direction shown in FIG. 3 herein. If an attempt is made to insert the single reel tape cartridge 36 in the opposite direction, the movable member 34 would immovably abut the spindle 52 and prevent insertion of the cartridge 36 into the tape player/recorder. Compact, audio, tape cassettes, on the other hand, are intentionally reversible, i.e., are designed to be inserted into the tape player/recorder from two distinct directions, the top first or bottom first, to play both "sides" or "tracks" of the tape. As a result, if the self-locking hub assembly of the '880 patent was used in a compact, audio, tape cassette, it might be capable of locking the hub when the cassette was not engaged with the tape player/recorder; however, unlocking of the hub and operation of the tape cassette would be impossible when inserted in a second direction.

Second, the self-locking hub described in the '880 patent requires enough vertical space in the cartridge to incorporate at least one opening 46, the movable member 34, the pivot pin 38 and the spring 42. In addition, the movable member 34 must have enough room to pivot up and down in order to operate. In a compact, audio, tape cassette space is very limited. For example, a self-locking hub assembly would have to occupy only about 155 to 165 thousandths of an inch. As a result, a compact, audio, tape cassette could not incorporate the several members or the pivoting, angular motion required by the self-locking hub assembly of the '880 patent. Further, in light of the limited ability to insert the device of the '880 patent in only one direction, if one were to attempt to make the movable member 34 pivot in opposite directions to allow insertion of the cassette top first or bottom first, more components and more space would be required, which a compact, audio, tape cassette could not accommodate.

Third, relatively complicated assembly of the pivoting device of the self-locking hub of the '880 patent in a compact, audio, tape cassette is prohibited by the mere nature of compact, audio, tape cassette manufacturing, wherein speedy, simple and low cost, mass production are critical.

In light of the above, a more efficient and easier to assemble self-locking hub assembly for a compact, audio, tape cassette is desired, which prevents the hubs from rotating whenever the cassette is not engaged with a tape player/recorder, but allows easy release of the hubs, when the cassette is inserted in either direction into a tape player/recorder. A faster and easier method for assembling a self-locking hub assembly is also desired.

## SUMMARY OF THE INVENTION

Accordingly, it is an object of the present invention to provide a self-locking hub assembly for a compact, audio, tape cassette capable of cost efficient manufacture and assembly, and reliable operation.

It is another object of the present invention to provide a self-locking hub assembly for a compact, audio, tape cassette capable of operational movement only parallel to the plane of the hub to minimize space requirements and allow insertion of the cassette into the tape player/recorder in more than one direction.

It is another object of the present invention to provide a self-locking hub assembly for a compact, audio, tape cassette capable of easily locking the hubs against rotation when the tape cassette is disengaged from a tape player/recorder and easily unlocking the hubs when inserted into the tape player/recorder in either of two directions.

It is another object of the present invention to provide a self-locking hub assembly for a compact, audio, tape cassette which efficiently fits fully within the interior of the tape cassette without undesirably interfering with the normal operation thereof.

It is another object of the present invention to provide a compact, audio, tape cassette with a self-locking hub assembly capable of automatic operation unassisted by the user of the tape cassette.

Finally, it is an object of the present invention to provide a method of assembling a self-locking hub assembly for a compact, audio, tape cassette characterized by greater speed and accuracy, facilitated automation and less cost than the prior art methods.

To achieve the foregoing and other objects of the present invention and in accordance with the purposes of the invention, there is provided an internal, self-locking hub assembly for a compact, audio, tape cassette, including a locking member with two moveable portions and spring means. The tape cassette includes receiving means formed in a raised annular ring thereof. When the tape cassette is disengaged from a tape player/recorder, the spring means normally urges the two movable portions radially inward parallel to the plane of the hub, whereby the two movable portions engage the receiving means, locking the hub and the tape against rotation. On the other hand, when the tape cassette is engaged with a tape player/recorder from either of two directions, the spindle of the tape player/recorder enters the center of the hub, abuts and pushes the two movable portions against the force of the spring means, thereby removing the two movable portions from the receiving means and permitting the normal rotation of the hub.

The related method includes the steps of: forming the locking member to include two movable portions, a spring means and a locking means; picking up the locking member; forming a hub to include mounting means corresponding to the locating means; advancing the locking member to the hub; inserting the locking member into the hub such that the locating means is received by the mounting means; mounting the hub into a cassette base; forming a cassette cover with receiving means; and positioning the cassette cover on the base, such that the receiving means receives the at least one movable portion.

## BRIEF DESCRIPTION OF THE DRAWINGS

The accompanying drawings, which are incorporated in and constitute a part of the specification, illustrate embodiments of the invention and, together with the description, serve to explain the principles of the invention.

FIG. 1 is a top, planar view of a conventional compact, audio, tape cassette, illustrating particularly the use of an elongated clip having end hooks inserted into the hubs to prevent despooling.

FIG. 2 is a side, cross-sectional view of a conventional self-locking hub assembly for a single reel tape cartridge, illustrating particularly the cartridge disengaged from a tape player/recorder.

FIG. 3 is a side, cross-sectional view of the self-locking hub assembly shown in FIG. 2, illustrating particularly the single reel tape cartridge engaged with a tape player/recorder.

FIG. 4 is a top, plan view of the compact, audio, tape cassette according to the present invention, illustrating particularly the first embodiment of the self-locking hub assembly while the tape cassette is disengaged from a tape player/recorder.

FIG. 5 is a top, plan view of one of the tape reels shown in FIG. 4.

FIG. 6 is a top, plan view of one of the locking members shown in FIG. 4.

FIG. 7 is a side, cross-sectional view of the locking member shown in FIG. 6 taken along line 7-7.

FIG. 8 is a front, cross-sectional view of the self-locking hub assembly shown in FIG. 4 taken along line 8-8.

## DETAILED DESCRIPTION OF THE PREFERRED EMBODIMENTS

The preferred embodiments of the present invention will now be described with reference to FIGS. 4-8, wherein like reference numerals indicate like parts.

A tape cassette 62 includes a cover 64 and a base 66, each of which are preferably made of a clear, hard plastic such as styrene. Positioned within the cover 64 and base 66 are a first tape reel hub 68 and a second tape reel hub 70 which supply and take up the tape 72 in the tape cassette 62. Each tape reel hub 68 and 70 is preferably made of a dark-colored plastic such as acetal. Elevated areas 74 and 76 can be formed in the cover 64 and the base 66 of the tape cassette 62, respectively, for receiving a tape guide 78, such as described in co-assigned U.S. Patent No.

4,506,846, now U.S. Reissue Patent No. 32,447.

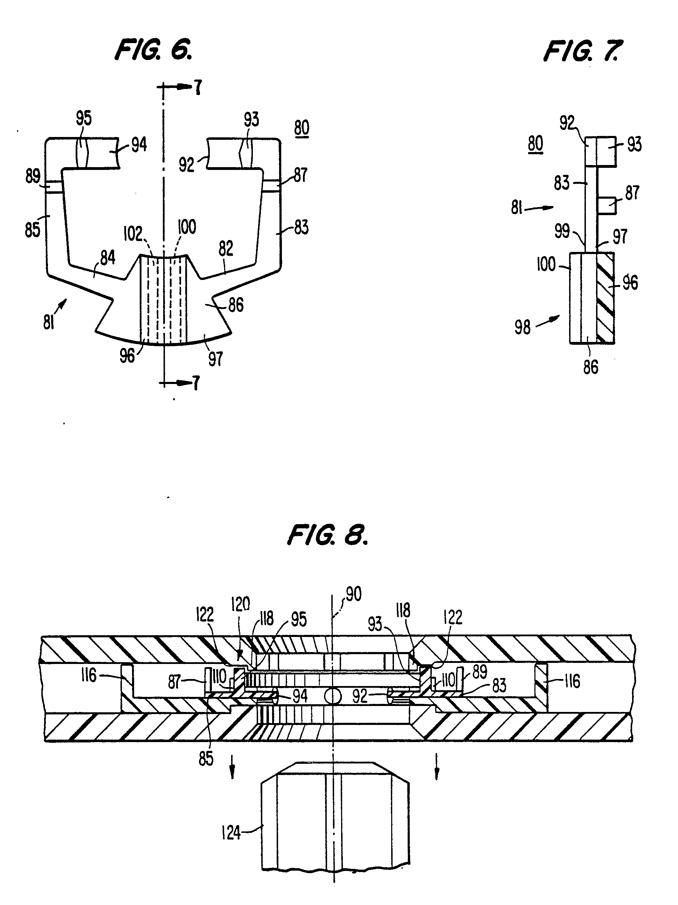

Although only a single hub is shown in FIGS. 5 and 8, it is to be understood that the present invention contemplates a similar structure for each of the two hubs in a compact, audio, tape cassette such as shown in FIG. 4.

Associated with each first tape reel hub 68 is a self-locking hub assembly 69. Associated with each second tape reel hub 70 is also a self-locking hub assembly 71 identical to the assembly 69. As a result, only the self-locking hub assembly 69 will be described hereafter in detail.

The self-locking hub assembly 69 includes a locking member 80, at least one portion of which is movable relative t the hub 68. More particularly, the locking member 80 includes spring means 81 in the form of two flat, angled spring arms 82 and 84 extending from a central, flat portion 86 of the locking member 80. Main portions 83 and 85 of the spring arms 82 and 84 are substantially parallel to each other. Each spring arm 82 and 84 preferably terminates in an abutting portion 92 and 94, extending perpendicular and coplanar to the main portions 83, 85, respectively. Connected to each of the abutting portions 92, 94 is an upwardly projecting engaging portion 93 and 95, respectively. Each spring arm 82, 84 normally biases the respective and movable abutting portions 92, 94 and the operatively connected engaging portions 93, 95 radially inward as shown by arrow "A" in FIG 4 relative to the center line 90 of the tape reel hub 68. Optionally, each spring arm 82 and 84 may also include an upright, reinforcing member 87, 89, each of which is intended to add rigidity to the spring arms 82 and 84 and to prevent upward bowing thereof.

In addition, the central portion 86 of the locking member 80 includes on the top surface 97 thereof a reinforcing member 96 and on the bottom surface 99 thereof locating means 98, such as a pair of parallel, rectangular ribs 100 and 102.

The hub 68 includes mounting means 104, such as a pair of parallel rectangular openings 106 and 108 (see FIG. 5) corresponding to the pair of rectangular ribs 100 and 102 of locating means 98. The hub 68 also includes an inner annular wall 110 having two opposing openings 112, 114 formed therein for receiving the abutting portions 92 and 94, respectively. The hub 68 also has an outer annular wall 116.

Raised annular rings 118 formed on the inside surface of the cover 64 of the tape cassette 62 include receiving means 120 therein such as a plurality of radially spaced receptacles 122

Operation of the present invention will now be described. Normally, the locking member 80 is kept in the "locked" position shown in FIG. 4. That is, the spring arms 82, 84 bias the abutting portions 92, 94 and engaging portions 93, 95 inwardly such that the engaging portions 93, 95 are received by two oppositely disposed receptacles 122 in the raised annular ring 118 of the cover 64. As a result, the hub 68 is prevented from rotating and no "despooling" of the tape occurs. On the other hand, upon insertion of the tape cassette 62 into a tape player/recorder as shown in FIG. 8, the finned spindle 124 of the tape player/recorder abuts and pushes on the movable abutting portions 92, 94, which causes the operatively connected and engaging portions 93, 95 to also move radially outward against the biasing force of the spring arms 82, 84. As the engaging portions 93, 95 move outwardly, they leave the receptacles 122, thereby releasing the hub 68 from the "locked" position and creating the "unlocked" position. In the unlocked position, the hubs 68, 70 are free to rotate on the raised annular rings 118 and transport tape while being driven by the spindle 124 of the tape player/recorder.

FIGS. 4-8 also illustrate the method of assembly according to the present invention, which comprises the following steps. First, the locking member 80 shown in FIGS. 6 and 7 is formed to include: the two movable portions, i.e. the engaging portions 93, 95 with abutting portions 92, 94; spring means 81; and locating means 98 as described above. Second, the locking member 80 is picked up by an automated apparatus (not shown), such as a robot arm. Third, the locking member 80 is advanced to a tape reel hub 68 formed to include mounting means 104 corresponding to the locating means 98, such as shown in FIG. 5. Fourth, the locking member 80 is inserted into the hub 68 such that the locating means 90 is fixedly received by the mounting means 104. Fifth, the hub 68 is mounted in a cassette base 66 as shown in FIGS. 4 and 8. Sixth, a cassette cover 64 is formed to include the receiving means 120. Seventh, and finally, the cassette cover 64 is positioned on the base 66 such that the receiving means 120 receives the engaging portions 93, 95, as shown again in FIGS. 4 and 8.

The foregoing is considered illustrative only of the principle of the invention. Further, since numerous modifications and change will readily occur to those skilled in the art, it is not desired to limit the invention to the exact construction and operation shown and described. Accordingly, all suitable modifications and equivalents may be resorted to, falling within the scope of the invention and the appended claims.

**Claims**

1. A self-locking hub assembly for use in a tape cassette having at least one hub to be rotated by a spindle of a tape player/recorder, the tape cassette also including opposing, substantially planar cover and base, each having a raised annular ring for locating the at lease one substantially planar hub of the tape cassette, comprising:

(a) a unitary, locking member positioned on a surface of the hub with first and second portions movable in a plane parallel to the plane of the hub;

(b) receiving means formed on the raised annular ring; and

(c) spring means associated with the locking member to normally bias the first and second movable portions radially inward parallel to the plane of the hub, thereby engaging the first and second movable portions with the receiving means formed on the raised annular ring and preventing rotation of the hub;

wherein the spring means comprises first and second spring arms extending from a central portion of the locking member to the first and second movable portions, respectively

wherein each movable portion is formed at the end of each spring arm opposite the end extending from the central portion of the locking member, and wherein, when the tape cassette is inserted in either direction into the tape player/recorder, the spindle of the tape player/recorder enters the hub, abuts and moves each movable portion radially outward parallel to the plane of the hub, thereby removing each movable portion from engagement with the receiving means and allowing the hub to be rotated by the spindle.

2. A tape cassette for use in a tape player/recorder, comprising:

(a) a substantially planar cover;

(b) a substantially planar base, the base fitting on the cover with the substantially planar portions parallel to define an enclosed space;

(c) at least one raised annular ring formed on the cassette including receiving means formed therein;

(d) at least one substantially planar tape reel hub located in the enclosed space by the at least one raised annular ring, the hub including a central opening for receiving a spindle of the tape player/recorder;

(e) a unitary locking member positioned on a surface 'of the hub with first and second portions movable in a plane parallel to the plane of the hub; and

(f) spring means associated with the locking member for normally biasing the first and second movable portions radially inward, thereby engaging the first and second movable portions with the receiving means and preventing rotation of the hub, wherein the spring means includes first and second spring arms extending from a central portion of the locking member, and wherein the first and second movable portions are formed at the end of each spring arm, respectively, opposite the end extending from the central portion of the locking member, and wherein, when the tape cassette is inserted in either direction into the tape player/recorder, the spindle enters the hub central opening, abuts and moves the first and second movable portions radially outward parallel to the plane of the hub, thereby removing the first and second movable portions from the receiving means and allowing the hub to be rotated by the spindle.

3. A method for assembling a self-locking hub assembly for a tape cassette, comprising the steps of:

(a) forming a unitary locking member having first and second movable portions, spring means and locating means, wherein the spring means includes first and second spring arms extending from a central portion of the locking member, and wherein each movable portion is formed at the end of each spring arm, respectively, opposite the end extending from the central portion of the locking member;

(b) forming a hub with a central opening and mounting means on an exterior surface thereof corresponding to the locating means;

(c) picking up the locking member;

(d) advancing the locking member to a tape reel hub;

(e) locating the locking member on the exterior surface of the tape reel hub such that the locating means is fixedly received by the mounting means and the first and second movable portions extend into the central opening in the hub;

(f) mounting the tape reel hub into a cassette base;

(g) forming the cassette cover to include receiving means; and

(h) positioning the cassette cover on the base such that the receiving means receives the at least one movable portion.

## FIG. 1.
(PRIOR ART)

## FIG. 2.
(PRIOR ART)

## FIG. 3.
(PRIOR ART)

**FIG. 4.**

**FIG. 5.**

**FIG. 6.**

**FIG. 7.**

**FIG. 8.**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENT ABSTRACTS OF JAPAN, vol. 9, no. 257 (P-396)[1980], 15th October 1985; & JP-A-60 106 086 (MATSUSHITA DENKI SANGYO K.K.) 11-06-1985 * Abstract; figures * | 1,2 | G 11 B 23/087 |
| A | PATENT ABSTRACTS OF JAPAN, vol. 8, no. 48 (P-258)[1485], 3rd March 1984; & JP-A-58 199 480 (SUEKO IWAHANA) 19-11-1983 * Abstract; figures * | 1,2 | |
| A | PATENT ABSTRACTS OF JAPAN, vol. 10, no. 34 (P-427)[2091], 8th February 1986; & JP-A-60 182 579 (TAKAYUKI NAKAMOTO) 18-09-1985 * Abstract; figures * | 1,2 | |
| A | EP-A-0 179 501 (AMPER) * Page 2, line 21 - page 3, line 30; figures * | 1,2 | TECHNICAL FIELDS SEARCHED (Int. Cl.4) |
| A | US-A-2 943 805 (S. LOEWE) * Column 1, line 45 - column 2, line 20; figures * | 1,2 | G 11 B |
| A | US-A-3 523 656 (L.P. KAMM) * Abstract; column 3, line 73 - column 4, line 11; figures * | 1,2 | |
| A | US-A-4 163 533 (A. ABE) * Abstract; claims; figures * | 1,2 | |
| E | US-A-4 736 903 (V. LANDRY) * Whole document; figures * | 1-3 | |
| A | US-A-3 706 426 (M.E. PRAHL) -/- | | |

The present search report has been drawn up for all claims

| Place of search | Date of completion of the search | Examiner |
|---|---|---|
| THE HAGUE | 03-10-1988 | DECLAT M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 099 399  (FUTURE TECHNOLOGY) | | |
| A | US-A-4 341 365  (K. OISHI) | | |
| A | FR-A-2 508 223  (SONY) | | |
| A | GB-A-2 099 400  (NIPPON VICTOR) | | |
| A | DE-A-3 137 889  (FUJI PHOTO) | | |
| A | EP-A-0 228 600  (HITACHI MAXELL) | | |

TECHNICAL FIELDS SEARCHED (Int. Cl.4)

The present search report has been drawn up for all claims

| Place of search | Date of completion of the search | Examiner |
|---|---|---|
| THE HAGUE | 03-10-1988 | DECLAT M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                    

& : member of the same patent family, corresponding document

EPO FORM 1503 03.82 (P0401)